# FASCICULE DE BREVET EUROPEEN

(11) **EP 4 047 441 B1**
(45) Date de publication et mention de la délivrance du brevet: **09.04.2025**
(21) Numéro de dépôt: 22154489.3
(22) Date de dépôt: 01.02.2022
(51) Int. Cl.: G05D 1/00

(54) **PROCÉDÉ ET DISPOSITIF POUR AIDER L'ÉQUIPAGE D'UN AÉRONEF A SORTIR L'AÉRONEF D'UNE SITUATION DE DÉCROCHAGE**
VERFAHREN UND VORRICHTUNG ZUR UNTERSTÜTZUNG DER BESATZUNG EINES FLUGZEUGS BEIM HERAUSFÜHREN DES FLUGZEUGS AUS EINEM STRÖMUNGSABRISS
METHOD AND DEVICE FOR ASSISTING THE CREW OF AN AIRCRAFT TO LEAVE THE AIRCRAFT IN A STALLING SITUATION

(30) Priorité: 18.02.2021 FR 2101555
(43) Date de publication de la demande: 24.08.2022
(73) Titulaire: AIRBUS (S.A.S.), 31700 Blagnac (FR); AIRBUS OPERATIONS (S.A.S.), 31060 Toulouse (FR)
(72) Inventeur: FONTAN, Julien, 31060 Toulouse (FR); CASTAIGNS, Philippe, 31700 Blagnac (FR); LE TINIER, Damien, 31060 Toulouse (FR); GADEA DIAZ, Enrique, 31060 Toulouse (FR)
(74) Mandataire: Gevers & Orès

(56) Documents cités:
- US-A1- 2014 371 957
- ANONYMOUS: "Stall (flight)", 24 January 2020 (2020-01-24), XP055827979, Retrieved from the Internet <URL:https://simple.wikipedia.org/wiki/Stall_(flight)> [retrieved on 20210727]

## Description

### DOMAINE TECHNIQUE

La présente invention concerne un procédé et un dispositif d'aide au pilotage, pour aider l'équipage d'un aéronef à sortir l'aéronef d'une situation de décrochage.

### ETAT DE LA TECHNIQUE

On sait que le système de commande et de contrôle d'un aéronef, en particulier d'un avion de transport, peut, dans certaines conditions, être amené dans un mode dégradé dans lequel diverses protections de l'enveloppe de vol peuvent être perdues, telles qu'une protection de l'angle d'incidence.

Dans de telles conditions, l'aéronef peut approcher d'une situation de décrochage, et sans une réaction appropriée de l'équipage, l'aéronef peut réellement subir un décrochage à savoir une diminution brusque de sa portance, causée par un angle d'incidence trop important, qui occasionne une perte d'altitude considérable, un décrochage survenant généralement à basse vitesse.

Les stratégies usuelles pour pallier des évènements ou risques de décrochage se basent uniquement sur l'émission d'une alerte signalant une situation de décrochage et sur l'application, dans ce cas, par l'équipage de l'aéronef de la procédure préconisée.

Dans une démarche d'amélioration continue, les constructeurs aéronautiques réfléchissent à des améliorations de cette stratégie.

Par ailleurs, on connaît, par le document US 2014/371957 A1, un procédé de diagnostic d'une perte de contrôle d'un aéronef. Ce procédé consiste à détecter des seuils caractéristiques de perte de contrôle à partir de données brutes et de données de l'aéronef, puis à identifier au moins un type de perte de contrôle prioritaire et à le communiquer à l'équipage.

On connaît également, par le document intitulé « Stall (flight) » issu de la page internet *https:*//*simple.wikipedia.org*/*wiki*/*Stall(flight)*, une liste succincte d'étapes génériques permettant de sortir un aéronef d'une situation de décrochage.

### EXPOSÉ DE L'INVENTION

La présente invention a pour objet de répondre à ce besoin. Pour ce faire, elle concerne un procédé d'aide au pilotage d'un aéronef, pour aider l'équipage de l'aéronef à sortir l'aéronef d'une situation de décrochage selon la revendication 1.

Selon l'invention, ledit procédé comprend au moins les étapes suivantes :
- une étape de réduction d'angle d'incidence, mise en œuvre par une première unité de réduction d'angle d'incidence à une durée prédéterminée après une émission d'une alerte de décrochage en cas d'absence de réaction de l'équipage, l'étape de réduction d'angle d'incidence comprenant une sous-étape de calcul consistant à générer un premier angle d'incidence cible à piquer et à convertir ce premier angle d'incidence cible en un premier ordre de tangage, et une sous-étape d'affichage consistant à afficher sur au moins un système d'affichage vertical de l'aéronef au moins un premier indicateur représentatif dudit premier ordre de tangage ;
- une étape de stabilisation, mise en œuvre par une unité de stabilisation après l'étape de réduction d'angle d'incidence, ladite étape de stabilisation comprenant une sous-étape de calcul consistant à générer un second angle d'incidence cible à cabrer et à convertir ce second angle d'incidence cible en un second ordre de tangage, et une seconde sous-étape d'affichage consistant à afficher sur le système d'affichage vertical de l'aéronef au moins un second indicateur représentatif dudit second ordre de tangage.

Ainsi, grâce à l'invention, on détermine et on affiche sur au moins un système d'affichage de l'aéronef des indicateurs d'aide au pilotage, lorsque l'aéronef s'approche d'une situation de décrochage, c'est-à-dire après une émission d'une alerte de décrochage (« Stall warning » en anglais) suivie d'une absence de réaction (appropriée) de l'équipage. Ces indicateurs vont aider l'équipage à sortir l'aéronef de la situation de décrochage en termes d'angle d'incidence, de facteur de charge et de vitesse.

Dans le cadre de la présente invention, on entend par « situation de décrochage », l'une ou l'autre des deux situations suivantes : une situation de risque de décrochage ou une situation de décrochage avéré, comme précisé ci-dessous.

Selon l'invention, ledit procédé comprend, de plus, une étape de contrôle de roulis mise en œuvre par une unité de contrôle de roulis, cette étape de contrôle de roulis comprenant une sous-étape de calcul consistant à convertir un angle de roulis cible en un ordre de roulis et une sous-étape d'affichage consistant à afficher sur au moins un système d'affichage latéral de l'aéronef au moins un indicateur représentatif dudit ordre de roulis, l'étape de contrôle de roulis étant mise en œuvre à partir du moment où l'angle d'inclinaison latérale de l'aéronef est supérieur à une valeur prédéterminée et l'angle de tangage de l'aéronef est négatif, et ce jusqu'à la fin de l'étape de stabilisation. De préférence, l'angle de roulis cible est sensiblement égal à 0°.

En outre, de façon avantageuse, la sous-étape de calcul de l'étape de réduction d'angle d'incidence génère le premier angle d'incidence cible de manière à obtenir une marge prédéterminée par rapport à un angle d'incidence d'alerte de décrochage.

Par ailleurs, avantageusement, la sous-étape de calcul de l'étape de stabilisation génère le second angle d'attaque cible de manière à obtenir un angle de trajectoire de vol sensiblement égal à un angle de trajectoire de vol total.

En outre, de façon avantageuse, l'étape de stabilisation :
- est mise en œuvre dès que l'angle d'incidence courant de l'aéronef est inférieur d'une marge prédéterminée d'un angle d'incidence d'alerte de décrochage ; et/ou
- est terminée (ou arrêtée) lorsque l'alerte de décrochage est désactivée et que l'angle de trajectoire de vol de l'aéronef est égal à l'angle de trajectoire de vol total pendant une durée prédéterminée.

Par ailleurs, selon l'invention, si, lors de la mise en œuvre de l'étape de stabilisation, l'angle d'incidence courant de l'aéronef s'approche d'une marge auxiliaire prédéterminée d'un angle d'incidence d'alerte de décrochage, l'étape de réduction d'angle d'incidence est de nouveau mise en œuvre à la place de ladite étape de stabilisation.

La présente invention concerne également un dispositif d'aide au pilotage d'un aéronef, pour aider l'équipage de l'aéronef à sortir l'aéronef d'une situation de décrochage.

Selon l'invention, ledit dispositif comporte au moins :
- une unité de réduction d'angle d'incidence comprenant une unité de calcul configurée pour générer, à une durée prédéterminée après une émission d'une alerte de décrochage en cas d'absence de réaction de l'équipage, un premier angle d'incidence cible à piquer et pour convertir ce premier angle d'incidence cible en un premier ordre de tangage, et une unité d'affichage configurée pour afficher sur au moins un système d'affichage vertical de l'aéronef au moins un premier indicateur représentatif dudit premier ordre de tangage ;
- une unité de stabilisation comprenant une unité de calcul configurée pour générer un second angle d'incidence cible à cabrer et pour convertir ce second angle d'incidence cible en un second ordre de tangage, et une seconde unité d'affichage configurée pour afficher sur le système d'affichage vertical de l'aéronef au moins un second indicateur représentatif dudit second ordre de tangage.

En outre, de façon avantageuse, ledit dispositif comporte, de plus, une unité de contrôle de roulis comprenant une unité de calcul configurée pour convertir un angle de roulis cible en un ordre de roulis et une unité d'affichage configurée pour afficher sur au moins un système d'affichage latéral de l'aéronef au moins un indicateur représentatif dudit ordre de roulis.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un dispositif d'aide au pilotage d'un aéronef destiné à aider à sortir l'aéronef d'une situation de décrochage.
La figure 2 est une vue schématique d'un aéronef volant le long d'une trajectoire de vol, sur laquelle on a mis en évidence les étapes d'un procédé d'aide au pilotage mis en œuvre par le dispositif d'aide au pilotage de la figure 1.
Les figures 3A à 3D illustrent l'affichage réalisé sur un système d'affichage vertical lors de la mise en œuvre du procédé d'aide au pilotage, respectivement à des moments successifs d'une étape de réduction d'angle d'incidence dudit procédé d'aide au pilotage.
Les figures 3E à 3G illustrent l'affichage réalisé sur le système d'affichage vertical lors de la mise en œuvre du procédé d'aide au pilotage, respectivement à des moments successifs d'une étape de stabilisation dudit procédé d'aide au pilotage.

### DESCRIPTION DÉTAILLÉE

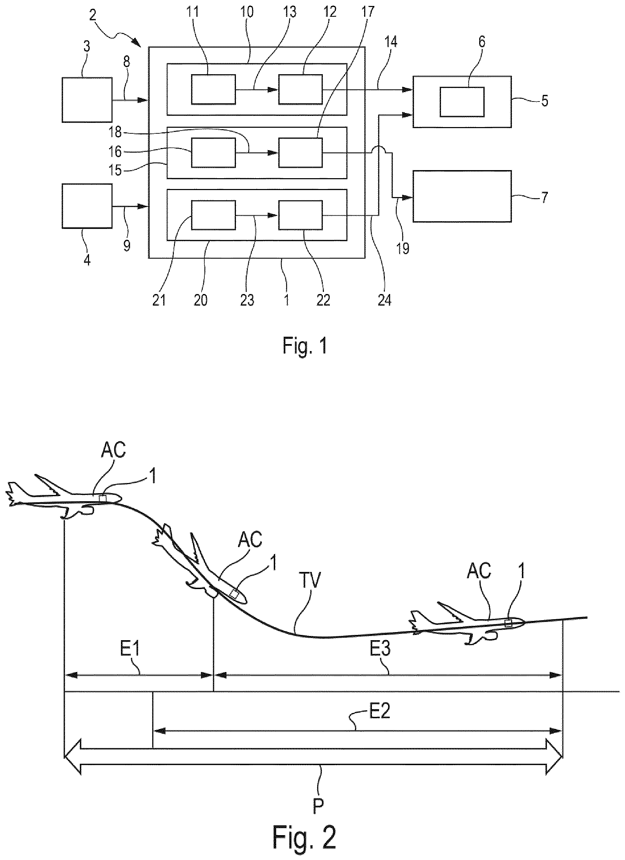

Le dispositif 1, représenté sur la figure 1 et permettant d'illustrer l'invention est un dispositif d'aide au pilotage d'un aéronef AC, en particulier d'un avion de transport, représenté à titre d'exemple sur la figure 2.

Ce dispositif 1 est destiné à aider l'équipage de l'aéronef à sortir l'aéronef AC d'une situation de décrochage. On entend, par équipage de l'aéronef AC, le ou les pilotes de l'aéronef AC ainsi que toute autre personne intervenant dans la gestion du vol de l'aéronef AC.

Ce dispositif 1 peut faire partie d'un système 2, plus général, de présentation de données et/ou d'aide à la commande et à la gestion du vol de l'aéronef AC.

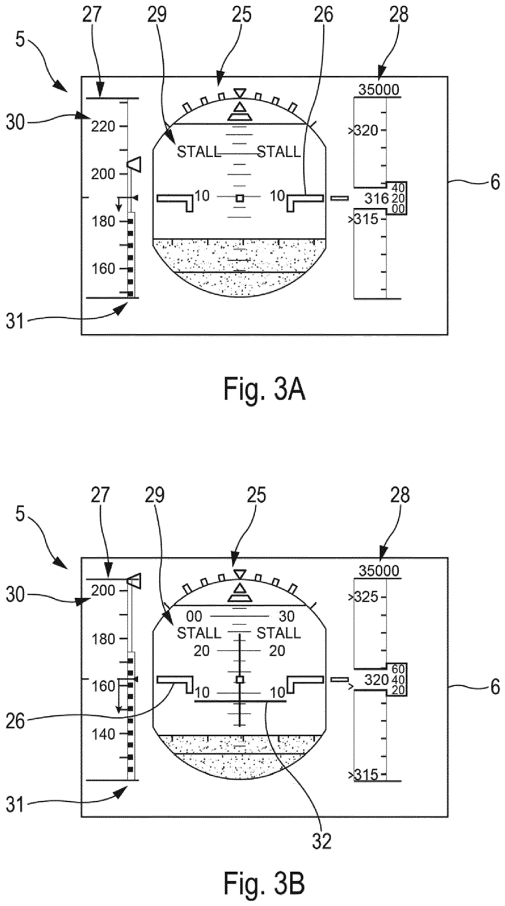

Ce système 2 comporte notamment, comme représenté sur la figure 1 :
- un dispositif d'alerte 3 configuré pour déclencher, de manière usuelle, une alerte de décrochage, de façon visuelle et/ou sonore, lorsque les conditions d'un tel déclenchement sont réunies ;
- un ensemble 4 de sources d'informations usuelles, comprenant des capteurs et/ou divers éléments ou dispositifs aptes à déterminer les valeurs courantes de paramètres de l'aéronef AC, tels que sa vitesse, son angle d'incidence, son facteur de charge,... ;
- au moins un système d'affichage vertical 5. Ce système d'affichage vertical 5 comprend un ou plusieurs écrans 6 aptes à afficher les valeurs de paramètres courants de l'aéronef selon l'axe vertical, comme précisé ci-après en référence à l'écran 6 représenté sur les figures 3A à 3G ; et
- au moins un système d'affichage latéral 7. Ce système d'affichage latéral 7 est configuré pour pouvoir afficher les valeurs courantes de paramètres de l'aéronef selon l'axe latéral.

Le dispositif 1 est activé après le déclenchement de l'alerte de dérochage (générée par le dispositif d'alerte 3), en tenant compte d'un délai de retard prédéterminé (par exemple trois secondes) permettant à l'équipage de réagir de manière appropriée et pour ne pas perturber l'équipage lorsqu'il réagit correctement (selon la procédure appropriée) à cette alerte de décrochage.

Dans le cadre de la présente invention, on considère que l'on se trouve dans une « situation de décrochage » lorsque l'une ou l'autre des deux situations suivantes se présente : une situation de risque de décrochage ou une situation de décrochage avéré. En effet, si l'équipage n'a pas effectué de manœuvre appropriée dans le temps imparti après l'émission (ou le déclenchement) de l'alerte de décrochage, l'aéronef peut se trouver dans une situation dans laquelle il vole au-delà de l'incidence d'alerte de décrochage ou une situation dans laquelle il présente une dynamique qui l'amènera au-delà de l'incidence de décrochage.

L'alerte de décrochage est déclenchée, de façon usuelle, par le dispositif d'alerte 3, en prenant en compte les valeurs courantes des paramètres suivants de l'aéronef :
- l'angle d'incidence (AOA pour « angle of attack » en anglais), à savoir l'angle formé par l'axe longitudinal de l'aéronef et par la projection de son vecteur vitesse sur un plan de référence passant par cet axe longitudinal ;
- le facteur de charge : et
- la vitesse.

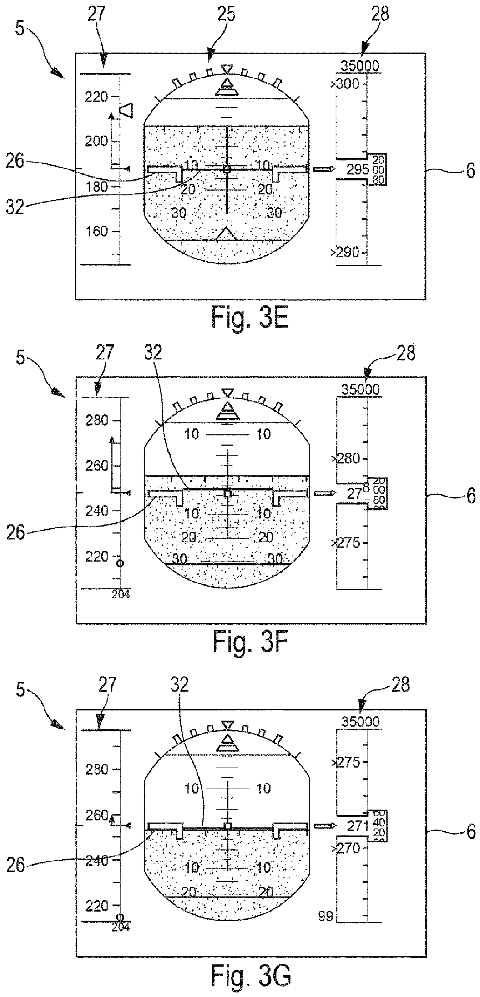

Le dispositif 1 qui est relié par l'intermédiaire de liaisons 8 et 9 respectivement au dispositif d'alerte 3 et à l'ensemble 4 comporte, comme représenté sur la figure 1 :
- une unité de réduction d'angle d'incidence 10 comprenant une unité de calcul 11 et une unité d'affichage 12. L'unité de calcul 11 est configurée pour générer, à une durée prédéterminée après l'émission d'une alerte de décrochage (par le dispositif d'alerte 3) en cas d'absence de réaction de l'équipage, un angle d'incidence α1c cible à piquer (précisé ci-dessous) et pour convertir cet angle d'incidence cible α1c en un ordre de tangage OT1. L'unité d'affichage 12 est configurée pour faire afficher sur l'écran 6 du système d'affichage vertical 5 (comme illustré par une liaison 14) au moins un indicateur 32 (figures 3B à 3D) représentatif dudit ordre de tangage OT1 (reçu de l'unité de calcul 11 via une liaison 13) ;
- une unité de contrôle de roulis 15 comprenant une unité de calcul 16 et une unité d'affichage 17. L'unité de calcul 16 est configurée pour convertir un angle de roulis cible φc prédéterminé en un ordre de roulis OR. L'unité d'affichage 17 est configurée pour faire afficher sur au moins un écran (non représenté) du système d'affichage latéral 7 (comme illustré par une liaison 19) au moins un indicateur (non représenté) représentatif dudit ordre de roulis OR (reçu de l'unité de calcul 16 via une liaison 18) ; et
- une unité de stabilisation 20 comprenant une unité de calcul 21 et une unité d'affichage 22. L'unité de calcul 21 est configurée pour générer un angle d'incidence cible α2c à cabrer (précisé ci-dessous) et pour convertir cet angle d'incidence cible α2c en un ordre de tangage OT2. L'unité d'affichage 22 est configurée pour faire afficher sur l'écran 6 du système d'affichage vertical 5 (comme illustré par une liaison 24) au moins un indicateur 32 (figures 3F et 3G) représentatif de l'ordre de tangage OT2 (reçu de l'unité de calcul 21 via une liaison 23).

Le dispositif 1, tel que décrit ci-dessus, est apte à mettre en œuvre un procédé P d'aide au pilotage. Ce procédé P d'aide au pilotage est destiné à aider l'équipage de l'aéronef AC à sortir (le cas échéant) l'aéronef AC d'une situation de décrochage.

Ledit procédé P est illustré sur la figure 2. Cette figure 2 montre différentes positions de l'aéronef AC (équipé du dispositif 1) volant le long d'une trajectoire de vol TV lors de la mise en œuvre dudit procédé P. Cette figure 2 montre notamment les périodes de mise en œuvre des différentes étapes E1, E2 et E3 (précisées ci-dessous) de ce procédé P lors du vol de l'aéronef AC.

Le procédé P est décrit ci-dessous, en référence aux figures 3A à 3G qui illustrent un mode de réalisation particulier d'un écran 6 du système d'affichage vertical 5. Cet écran 6 comprend, de façon usuelle, une fenêtre d'affichage 25 relative à un directeur de vol qui affiche, en temps réel, un symbole 26 indiquant la valeur courante de l'angle de tangage de l'aéronef AC. En outre, l'écran 6 comprend également des fenêtres d'affichage usuelles 27 et 28 qui affichent, respectivement, des informations de vitesse et d'altitude de l'aéronef AC.

Ledit procédé P comprend, tout d'abord, une étape E1 de réduction d'angle d'incidence. L'étape E1 est mise en œuvre par l'unité de réduction d'angle d'incidence 10 (figure 1), en cas d'émission d'une alerte de décrochage par le dispositif d'alerte 3 et d'absence de réaction appropriée de l'équipage après une durée prédéterminée (après cette émission). Cette alerte est signalée sur l'écran 6 par plusieurs affichages, de préférence en rouge, du terme anglais « STALL » (signifiant « décrochage ») comme montré par une flèche 29 sur la figure 3A. L'alerte est également signalée par un indicateur auxiliaire 31 sur la fenêtre de vitesse 27 à côté de l'échelle de vitesse 30. Cet indicateur auxiliaire 31 comprend, par exemple, des carrés rouges qui sont agencés au niveau de toutes les vitesses de l'échelle de vitesse 30, susceptibles de générer un décrochage.

L'étape E1 comprend une sous-étape de calcul (mise en œuvre par l'unité de calcul 11) consistant à générer l'angle d'incidence cible α1c à piquer, ainsi qu'à convertir cet angle d'incidence cible α1c pour obtenir l'ordre de tangage OT1, et une sous-étape d'affichage (mise en œuvre par l'unité d'affichage 12) consistant à faire afficher sur l'écran 6 du système d'affichage vertical 5 au moins l'indicateur 32 représentatif dudit ordre de tangage OT1, comme représenté sur la figure 3B.

L'unité de calcul 11 calcule, à la sous-étape de calcul de l'étape E1 de réduction d'angle d'incidence, l'angle d'incidence cible α1c de manière à obtenir une marge (prédéterminée) suffisante par rapport à un angle d'incidence d'alerte de décrochage, c'est-à-dire par rapport à l'angle d'incidence pour lequel l'alerte de décrochage est générée par le dispositif d'alerte 3.

L'étape E1 (et ainsi le procédé P) est donc déclenchée après le déclenchement de l'alerte de dérochage, avec un retard permettant de ne pas perturber un équipage qui a réagi correctement à l'alerte de dérochage.

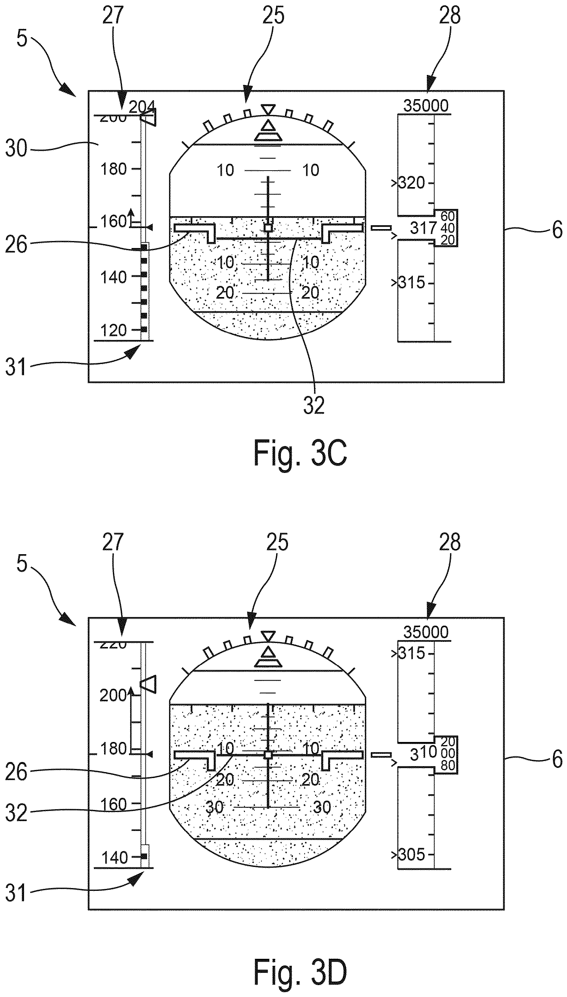

Après l'émission de l'alerte, telle que représentée sur la figure 3A, déclenchant la mise en œuvre du procédé P, l'indicateur 32 est donc affiché sur la fenêtre 25, comme représenté sur la figure 3B, A partir de ce moment, l'équipage pilote l'aéronef AC, de préférence manuellement, pour amener le tangage courant de l'aéronef AC à la valeur de tangage indiquée par l'indicateur 32, en faisant coïncider le symbole 26 avec cet indicateur 32, comme représenté sur la figure 3C.

Dans la situation suivante, représentée sur la figure 3D, l'aéronef AC a récupéré la marge d'incidence recherchée.

Cette étape E1 a pour but de permettre à l'équipage de piloter manuellement l'aéronef AC de manière à appliquer l'ordre de tangage OT1 afin que l'aéronef AC retrouve un angle d'incidence approprié pour lequel il n'existe plus de risque de décrochage.

Le procédé P comprend également une étape E2 de contrôle de roulis, mise en œuvre par l'unité de contrôle de roulis 15. L'étape E2 de contrôle de roulis comprend une sous-étape de calcul (mise en œuvre par l'unité de calcul 16) consistant à convertir l'angle de roulis cible φc (de valeur prédéterminée) pour obtenir l'ordre de roulis OR et une sous-étape d'affichage (mise en œuvre par l'unité d'affichage 17) consistant à afficher sur le système d'affichage latéral 7 (figure 1) au moins un indicateur (non représenté) représentatif dudit ordre de roulis OR. Cette étape E2 de contrôle de roulis est mise en œuvre, après le déclenchement de l'étape E1, lorsque l'équipage de l'aéronef a réalisé une réduction significative de l'angle d'incidence lors de la mise en œuvre de l'étape E1. Plus précisément, cette étape E2 débute à partir du moment où l'angle d'inclinaison latérale de l'aéronef AC est supérieur à une valeur prédéterminée et l'angle de tangage de l'aéronef AC est négatif.

Au cours de l'étape E2, l'équipage pilote l'aéronef AC, de préférence manuellement, pour amener le roulis courant de l'aéronef AC à la valeur de roulis indiquée par l'indicateur (non représenté) représentatif dudit ordre de roulis OR.

Cette étape E2 de contrôle de roulis est mise en œuvre jusqu'à la fin de l'étape E3 de stabilisation précisée ci-dessous.

De préférence, l'angle de roulis cible φc est sensiblement égal à 0°. L'étape E2 a ainsi pour but d'annuler l'éventuel roulis de l'aéronef AC et de maintenir le roulis nul durant la mise en œuvre du procédé P pour le stabiliser latéralement.

Le procédé P comprend également cette étape E3 de stabilisation (verticale). L'étape E3 est mise en œuvre par l'unité de stabilisation 20, après l'étape E1 de réduction d'angle d'incidence. L'étape E3 de stabilisation comprend une sous-étape de calcul (mise en œuvre par l'unité de calcul 21) consistant à générer l'angle d'incidence cible α2c à cabrer et à convertir cet angle d'incidence cible α2c pour obtenir l'ordre de tangage OT2, et une sous-étape d'affichage (mise en œuvre par l'unité d'affichage 22) consistant à afficher sur l'écran 6 du système d'affichage vertical 5 au moins l'indicateur 32 représentatif de cet ordre de tangage OT2, comme représenté sur la figure 3F.

Dans l'exemple représenté sur les figures 3B à 3G, on prévoit le même indicateur 32 pour afficher l'ordre de tangage OT1 à l'étape E1 et pour afficher l'ordre de tangage OT2 à l'étape E3. Il pourrait également être envisagé d'afficher deux indicateurs différents (par exemple de formes, de tailles et/ou de couleurs différentes) respectivement pour ces deux ordres de tangage OT1 et OT2.

L'unité de calcul 21 calcule, à la sous-étape de calcul de l'étape E3 de stabilisation, l'angle d'attaque cible α2c de manière à obtenir un angle de trajectoire de vol (FPA pour « flight path angle » en anglais) de l'aéronef AC sensiblement égal à un angle de trajectoire de vol total.

En outre, l'étape E3 de stabilisation (c'est-à-dire la transition de l'étape E1 à l'étape E3) est mise en œuvre dès que l'angle d'incidence courant de l'aéronef AC est inférieur (d'une marge prédéterminée) à l'angle d'incidence d'alerte de décrochage. Cette transition est représentée sur la figure 3E.

Comme l'étape E3 est mise en œuvre après la phase E1 (de réduction d'angle d'incidence), cette étape E3 a pour objet de générer un ordre de tangage OT2 à cabrer dans le but de réduire la perte d'altitude de l'aéronef AC et de stabiliser sa vitesse aérodynamique (avec la poussée courante des moteurs de l'aéronef AC).

Au cours de l'étape E3, l'équipage pilote l'aéronef AC, de préférence manuellement, pour amener le tangage courant de l'aéronef AC à la valeur de tangage indiquée par l'indicateur 32, en faisant coïncider le symbole 26 avec cet indicateur 32, comme représenté sur la figure 3F.

L'étape E3 de stabilisation (et ainsi le procédé P) est terminée, comme représenté sur la figure 3G, lorsque les deux conditions suivantes sont remplies simultanément :
- l'alerte de décrochage est désactivée ; et
- l'angle de trajectoire de vol de l'aéronef est égal à l'angle de trajectoire de vol total pendant une durée prédéterminée.

Par ailleurs, si, lors de la mise en œuvre de l'étape E3 de stabilisation, l'angle d'incidence courant de l'aéronef AC s'approche de nouveau (d'une marge auxiliaire prédéterminée) de l'angle d'incidence d'alerte de décrochage, l'étape E1 de réduction d'angle d'incidence est de nouveau mise en œuvre à la place de ladite étape E3 de stabilisation. Ceci permet d'obtenir une inversion de ces étapes E1 et E3, et le procédé P est de nouveau mis en œuvre de la manière décrite ci-dessus à partir de cette étape E1.

La transition entre les étapes E1 et E3 est donc réversible. La transition inverse de l'étape E3 à l'étape E1 est mise en œuvre lorsque l'angle d'incidence courant s'approche trop près de l'incidence d'alerte de décrochage, en prévoyant une hystérésis par rapport à la transition initiale entre les étapes E1 et E3.

Ainsi, grâce à ce procédé P mis en œuvre par le dispositif 1, on détermine et on affiche sur les systèmes d'affichage 5 et 7 de l'aéronef des indicateurs d'aide au pilotage lorsque l'aéronef s'approche d'une situation de décrochage (après le déclenchement de l'alerte de décrochage). Ces indicateurs vont aider l'équipage à sortir, de façon rapide et efficace, de cette situation pour revenir dans une situation de vol nominale en termes d'angle d'incidence, de facteur de charge et de vitesse, avec l'aéronef stabilisé en fin de procédé.

Le dispositif 1, tel que décrit ci-dessus, présente ainsi de nombreux avantages. Tout d'abord, il augmente la prise de conscience de l'équipage de la situation de décrochage.

De plus, en suivant les indicateurs destinés à permettre une sortie de la situation de décrochage, l'équipage :
- évite à l'aéronef de décrocher réellement (et d'entrer dans une situation de « super décrochage » (« deep stall » en anglais)) ;
- évite de déclencher une seconde alerte de situation de décrochage durant la phase de sortie de la situation de décrochage ;
- évite une réaction excessive qui pourrait générer une forte survitesse ; et
- permet à l'aéronef d'atteindre une situation stable à la sortie de la situation de décrochage.

## Revendications

1. Procédé d'aide au pilotage d'un aéronef, pour aider l'équipage de l'aéronef à sortir l'aéronef d'une situation de décrochage, ledit procédé comprenant au moins les étapes suivantes :
- une étape de réduction d'angle d'incidence (E1), mise en œuvre par une première unité de réduction d'angle d'incidence (10) à une durée prédéterminée après une émission d'une alerte de décrochage en cas d'absence de réaction de l'équipage, l'étape de réduction d'angle d'incidence (E1) comprenant une sous-étape de calcul consistant à générer un premier angle d'incidence cible à piquer et à convertir ce premier angle d'incidence cible en un premier ordre de tangage, et une sous-étape d'affichage consistant à afficher sur au moins un système d'affichage vertical (5) de l'aéronef (AC) au moins un premier indicateur (32) représentatif dudit premier ordre de tangage ;
- une étape de stabilisation (E3), mise en œuvre par une unité de stabilisation (20) après l'étape de réduction d'angle d'incidence (E1), ladite étape de stabilisation (E3) comprenant une sous-étape de calcul consistant à générer un second angle d'incidence cible à cabrer et à convertir ce second angle d'incidence cible en un second ordre de tangage, et une seconde sous-étape d'affichage consistant à afficher sur le système d'affichage vertical (5) de l'aéronef (AC) au moins un second indicateur (32) représentatif dudit second ordre de tangage ;
- une étape de contrôle de roulis (E2), mise en œuvre par une unité de contrôle de roulis (15), comprenant une sous-étape de calcul consistant à convertir un angle de roulis cible en un ordre de roulis et une sous-étape d'affichage consistant à afficher sur au moins un système d'affichage latéral (7) de l'aéronef (AC) au moins un indicateur représentatif dudit ordre de roulis, l'étape de contrôle de roulis (E2) étant mise en œuvre à partir du moment où l'angle d'inclinaison latérale de l'aéronef (AC) est supérieur à une valeur prédéterminée et l'angle de tangage de l'aéronef (AC) est négatif, et ce jusqu'à la fin de l'étape de stabilisation (E3),
le procédé étant **caractérisé en ce que**, si, lors de la mise en œuvre de l'étape de stabilisation (E3), l'angle d'incidence courant de l'aéronef (AC) s'approche d'une marge auxiliaire prédéterminée d'un angle d'incidence d'alerte de décrochage, l'étape de réduction d'angle d'incidence (E1) est de nouveau mise en œuvre à la place de ladite étape de stabilisation (E3).

2. Procédé selon la revendication 1,
**caractérisé en ce que** l'angle de roulis cible est sensiblement égal à 0°.

3. Procédé selon l'une quelconque des revendications précédentes, **caractérisé en ce que** la sous-étape de calcul de l'étape de réduction d'angle d'incidence (E1) génère le premier angle d'incidence cible de manière à obtenir une marge prédéterminée par rapport à un angle d'incidence d'alerte de décrochage.

4. Procédé selon l'une quelconque des revendications précédentes, **caractérisé en ce que** la sous-étape de calcul de l'étape de stabilisation (E3) génère le second angle d'attaque cible de manière à obtenir un angle de trajectoire de vol sensiblement égal à un angle de trajectoire de vol total.

5. Procédé selon l'une quelconque des revendications précédentes, **caractérisé en ce que** l'étape de stabilisation (E3) est mise en œuvre dès que l'angle d'incidence courant de l'aéronef (AC) est inférieur d'une marge prédéterminée d'un angle d'incidence d'alerte de décrochage.

6. Procédé selon l'une quelconque des revendications précédentes, **caractérisé en ce que** l'étape de stabilisation (E3) est terminée lorsque l'alerte de décrochage est désactivée et que l'angle de trajectoire de vol de l'aéronef (AC) est égal à l'angle de trajectoire de vol total pendant une durée prédéterminée.

7. Dispositif d'aide au pilotage d'un aéronef, pour aider l'équipage de l'aéronef à sortir l'aéronef d'une situation de décrochage, ledit dispositif comportant au moins :
- une unité de réduction d'angle d'incidence (10) comprenant une unité de calcul (11) configurée pour générer, à une durée prédéterminée après une émission d'une alerte de décrochage en cas d'absence de réaction de l'équipage, un premier angle d'incidence cible à piquer et pour convertir ce premier angle d'incidence cible en un premier ordre de tangage, et une unité d'affichage (12) configurée pour afficher sur au moins un système d'affichage vertical (5) de l'aéronef (AC) au moins un premier indicateur (32) représentatif dudit premier ordre de tangage ;
- une unité de stabilisation (20) comprenant une unité de calcul (21) configurée pour générer un second angle d'incidence cible à cabrer et pour convertir ce second angle d'incidence cible en un second ordre de tangage, et une seconde unité d'affichage (22) configurée pour afficher sur le système d'affichage vertical (5) de l'aéronef (AC) au moins un second indicateur (32) représentatif dudit second ordre de tangage ;
- une unité de contrôle de roulis (15) comprenant une unité de calcul (16) configurée pour convertir un angle de roulis cible en un ordre de roulis et une unité d'affichage (17) configurée pour afficher sur au moins un système d'affichage latéral (7) de l'aéronef (AC) au moins un indicateur représentatif dudit ordre de roulis,
le dispositif (1) étant configuré de sorte que si, lors de la mise en œuvre de l'étape de stabilisation (E3) par l'unité de stabilisation (20), l'angle d'incidence courant de l'aéronef (AC) s'approche d'une marge auxiliaire prédéterminée d'un angle d'incidence d'alerte de décrochage, une étape de réduction d'angle d'incidence (E1) est de nouveau mise en œuvre par l'unité de réduction d'angle d'incidence (10) à la place de ladite étape de stabilisation (E3).

## Patentansprüche

1. Verfahren zur Steuerungshilfe eines Luftfahrzeugs, um der Besatzung des Luftfahrzeugs zu helfen, das Luftfahrzeug aus einer Strömungsabriss-Situation herauszuführen, wobei das Verfahren mindestens die folgenden Schritte umfasst:
- einen Einfallswinkelverringerungsschritt (E1), der bei einer vorbestimmten Dauer nach einer Ausgabe einer Strömungsabriss-Warnung im Fall von Abwesenheit einer Reaktion der Besatzung durch eine erste Einfallswinkelverringerungseinheit (10) durchgeführt wird, wobei der Einfallswinkelverringerungsschritt (E1) einen Berechnungsteilschritt, der daraus besteht, einen ersten Nose-down-Zieleinfallswinkel zu erzeugen und diesen ersten Zieleinfallswinkel in einen ersten Nickbefehl umzuwandeln, und einen Anzeigeteilschritt umfasst, der daraus besteht, auf mindestens einem vertikalen Anzeigesystem (5) des Luftfahrzeugs (AC) mindestens einen ersten Indikator (32) anzuzeigen, der für den ersten Nickbefehl repräsentativ ist;
- einen Stabilisierungsschritt (E3), der durch eine Stabilisierungseinheit (20) nach dem Einfallswinkelverringerungsschritt (E1) durchgeführt wird, wobei der Stabilisierungsschritt (E3) einen Berechnungsteilschritt, der daraus besteht, einen zweiten Nose-up-Zieleinfallswinkel zu erzeugen und diesen zweiten Zieleinfallswinkel in einen zweiten Nickbefehl umzuwandeln, und einen zweiten Anzeigeteilschritt umfasst, der daraus besteht, auf dem vertikalen Anzeigesystem (5) des Luftfahrzeugs (AC) mindestens einen zweiten Indikator (32) anzuzeigen, der für den zweiten Nickbefehl repräsentativ ist;
- einen Rollensteuerungsschritt (E2), der durch eine Rollensteuerungseinheit (15) durchgeführt wird, der einen Berechnungs-Teilschritt, der daraus besteht, einen Zielrollenwinkel in einen Rollenbefehl umzuwandeln, und einen Anzeigeteilschritt umfasst, der daraus besteht, auf mindestens einem seitlichen Anzeigesystem (7) des Luftfahrzeugs (AC) mindestens einen Indikator anzuzeigen, der für den Rollenbefehl repräsentativ ist, wobei der Rollensteuerungsschritt (E2) ab dem Moment, bei dem der seitliche Einfallswinkel des Luftfahrzeugs (AC) größer ist als ein vorbestimmter Wert und der Nickwinkel des Luftfahrzeugs (AC) negativ ist, und bis zu dem Ende des Stabilisierungsschritts (E3) durchgeführt wird,
wobei das Verfahren **dadurch gekennzeichnet ist, dass**, wenn sich bei der Durchführung des Stabilisierungsschritts (E3) der aktuelle Einfallswinkel des Luftfahrzeugs (AC) einem vorbestimmten Hilfsbereich eines Strömungsabrisswarnung-Einfallswinkels annähert, der Einfallswinkelverringerungsschritt (E1) anstelle des Stabilisierungsschritts (E3) erneut durchgeführt wird.

2. Verfahren nach Anspruch 1,
**dadurch gekennzeichnet, dass** der Zielrollenwinkel im Wesentlichen gleich 0° ist.

3. Verfahren nach einem der vorstehenden Ansprüche,
**dadurch gekennzeichnet, dass** der Berechnungs-Teilschritt des Einfallswinkelverringerungsschritts (E1) den ersten Zieleinfallswinkel auf eine Weise erzeugt, um in Bezug auf einen Strömungsabrisswarnung-Einfallswinkel einen vorbestimmten Bereich zu erhalten.

4. Verfahren nach einem der vorstehenden Ansprüche,
**dadurch gekennzeichnet, dass** der Berechnungsteilschritt des Stabilisierungsschritts (E3) den zweiten Zielanstellwinkel auf eine Weise erzeugt, um einen Flugbahnwinkel im Wesentlichen gleich einem Gesamtflugbahnwinkel zu erhalten.

5. Verfahren nach einem der vorstehenden Ansprüche,
**dadurch gekennzeichnet, dass** der Stabilisierungsschritt (E3) durchgeführt wird, sobald der aktuelle Einfallswinkel des Luftfahrzeugs (AC) kleiner ist als ein vorbestimmter Bereich eines Strömungsabrisswarnung-Einfallswinkels.

6. Verfahren nach einem der vorstehenden Ansprüche,
**dadurch gekennzeichnet, dass** der Stabilisierungsschritt (E3) beendet wird, wenn die Strömungsabriss-Warnung deaktiviert wird und der Flugbahnwinkel des Luftfahrzeugs (AC) während einer vorbestimmten Dauer gleich dem Gesamtflugbahnwinkel ist.

7. Vorrichtung zur Steuerungshilfe eines Luftfahrzeugs, um der Besatzung des Luftfahrzeugs zu helfen, das Luftfahrzeug aus einer Strömungsabriss-Situation herauszuführen, wobei die Vorrichtung mindestens umfasst:
- eine Einfallswinkelverringerungseinheit (10), die eine Berechnungseinheit (11), die konfiguriert ist, um bei einer vorbestimmten Dauer nach einer Ausgabe einer Strömungsabriss-Warnung im Fall von Abwesenheit einer Reaktion der Besatzung, einen ersten Nose-down-Zieleinfallswinkel zu erzeugen und um diesen ersten Zieleinfallswinkel in einen ersten Nickbefehl umzuwandeln, und eine Anzeigeeinheit (12) umfasst, die konfiguriert ist, um auf mindestens einem vertikalen Anzeigesystem (5) des Luftfahrzeugs (AC) mindestens einen ersten Indikator (32) anzuzeigen, der für den ersten Nickbefehl repräsentativ ist;
- eine Stabilisierungseinheit (20), die eine Berechnungseinheit (21), die konfiguriert ist, um einen zweiten Nose-up-Zieleinfallswinkel zu erzeugen und diesen zweiten Zieleinfallswinkel in einen zweiten Nickbefehl umzuwandeln, und eine zweite Anzeigeeinheit (22) umfasst, die konfiguriert ist, um auf dem vertikalen Anzeigesystem (5) des Luftfahrzeugs (AC) mindestens einen zweiten Indikator (32) anzuzeigen, der für den zweiten Nickbefehl repräsentativ ist;
- eine Rollensteuerungseinheit (15), die eine Berechnungseinheit (16), die konfiguriert ist, um einen Zielrollenwinkel in einen Rollenbefehl umzuwandeln, und eine Anzeigeeinheit (17) umfasst, die konfiguriert ist, um auf mindestens einem seitlichen Anzeigesystem (7) des Luftfahrzeugs (AC) mindestens einen Indikator anzuzeigen, der für den Rollenbefehl repräsentativ ist,
wobei die Vorrichtung (1) derart konfiguriert ist, dass, wenn sich bei der Durchführung des Stabilisierungsschritts (E3) durch die Stabilisierungseinheit (20) der aktuelle Einfallswinkel des Luftfahrzeugs (AC) einem vorbestimmten Hilfsbereich eines Strömungsabrisswarnung-Einfallswinkels annähert, der Einfallswinkelverringerungsschritt (E1) anstelle des Stabilisierungsschritts (E3) erneut durch die Einfallswinkelverringerungseinheit (10) durchgeführt wird.

## Claims

1. A piloting assistance method for an aircraft, for assisting the aircraft crew in recovering the aircraft from a stall condition, said method comprising at least the following steps:
- an angle of attack reduction step (E1), implemented by a first angle of attack reduction unit (10) at a predetermined time after a stall warning has been transmitted in the event of a lack of response from the crew, the angle of attack reduction step (E1) comprising a computation sub-step involving generating a first nose down target angle of attack and converting this first target angle of attack into a first pitch command, and a display sub-step involving displaying, on at least one vertical display system (5) of the aircraft (AC), at least one first indicator (32) representing said first pitch command;
- a stabilization step (E3), implemented by a stabilization unit (20) after the angle of attack reduction step (E1), said stabilization step (E3) comprising a computation sub-step involving generating a second nose up target angle of attack and converting this second target angle of attack into a second pitch command, and a second display sub-step involving displaying, on the vertical display system (5) of the aircraft (AC), at least one second indicator (32) representing said second pitch command;
- a roll control step (E2), implemented by a roll control unit (15), comprising a computation sub-step involving converting a target roll angle into a roll command and a display sub-step involving displaying, on at least one lateral display system (7) of the aircraft (AC), at least one indicator representing said roll command, the roll control step (E2) being implemented from the moment when the lateral bank angle of the aircraft (AC) is greater than a predetermined value and the pitch angle of the aircraft (AC) is negative, until the end of the stabilization step (E3),
the method being **characterized in that** if, when the stabilization step (E3) is implemented, the current angle of attack of the aircraft (AC) approaches a predetermined additional margin of a stall warning angle of attack, the angle of attack reduction step (E1) is implemented again instead of said stabilization step (E3).

2. The method as claimed in claim 1,
**characterized in that** the target roll angle is substantially equal to 0°.

3. The method as claimed in any one of the preceding claims, **characterized in that** the computation sub-step of the angle of attack reduction step (E1) generates the first target angle of attack so as to obtain a predetermined margin in relation to a stall warning angle of attack.

4. The method as claimed in any one of the preceding claims, **characterized in that** the computation sub-step of the stabilization step (E3) generates the second target angle of attack so as to obtain a flight path angle that is substantially equal to a total flight path angle.

5. The method as claimed in any one of the preceding claims, **characterized in that** the stabilization step (E3) is implemented as soon as the current angle of attack of the aircraft (AC) is lower than a stall warning angle of attack by a predetermined margin.

6. The method as claimed in any one of the preceding claims, **characterized in that** the stabilization step (E3) is completed when the stall warning is deactivated and the flight path angle of the aircraft (AC) is equal to the total flight path angle for a predetermined duration.

7. A piloting assistance device for an aircraft, for assisting the aircraft crew in recovering the aircraft from a stall condition, said device (1) comprising at least:
- an angle of attack reduction unit (10) comprising a computation unit (11) configured to generate, at a predetermined time after a stall warning has been transmitted in the event of a lack of response from the crew, a first nose down target angle of attack and to convert this first target angle of attack into a first pitch command, and a display unit (12) configured to display, on at least one vertical display system (5) of the aircraft (AC), at least one first indicator (32) representing said first pitch command;
- a stabilization unit (20) comprising a computation unit (21) configured to generate a second nose up target angle of attack and to convert this second target angle of attack into a second pitch command, and a second display unit (22) configured to display, on the vertical display system (5) of the aircraft (AC), at least one second indicator (32) representing said second pitch command;
- a roll control unit (15) comprising a computation unit (16) configured to convert a target roll angle into a roll command and a display unit (17) configured to display, on at least one lateral display system (7) of the aircraft (AC), at least one indicator representing said roll command,
the device (1) being configured such that if, when the stabilization step (E3) is implemented by the stabilization unit (20), the current angle of attack of the aircraft (AC) approaches a predetermined additional margin of a stall warning angle of attack, an angle of attack reduction step (E1) is implemented again by the angle of attack reduction unit (10) instead of said stabilization step (E3).
